# EUROPEAN PATENT SPECIFICATION

(11) **EP 2 242 380 B1**
(45) Date of publication and mention of the grant of the patent: **21.10.2015**
(21) Application number: 08867694.5
(22) Date of filing: 26.11.2008
(51) Int. Cl.: A23L 1/164, A23L 1/18, A23L 1/182, A23L 1/10, A23L 1/236

(54) **GRAIN PRODUCTS HAVING A POTENT NATURAL SWEETENER AND A BULKING AGENT**
GETREIDEPRODUKTE MIT EINEM STARKEN NATÜRLICHEN SÜSSMITTEL UND EINEM FÜLLSTOFF
PRODUITS CÉRÉALIERS COMPORTANT UN AGENT VOLUMATEUR ET UN ÉDULCORANT NATUREL PUISSANT

(30) Priority: 21.12.2007 US 962748
(43) Date of publication of application: 27.10.2010
(73) Proprietor: The Quaker Oats Company, Chicago, IL 60661 (US)
(72) Inventor: MCARDLE, Richard, Palatine IL 60067 (US); MUI, Sandy, Cary IL 60013 (US); PARSONS, Marcus, H., Crystal Lake IL 60014 (US)
(74) Representative: Jenkins, Peter David
(86) International application number: PCT/US2008/084771
(87) International publication number: WO 2009/085511

(56) References cited:
- EP-A- 0 749 697
- EP-A- 1 038 448
- US-A- 5 215 770
- US-A1- 2007 116 821

## Description

### TECHNICAL FIELD

This invention relates to grain products having a potent natural sweetener and a bulking agent, with or without other ingredients, for example, grain products commonly known to consumers as cereal. In particular, this invention relates to grain products having formulations suitable to meet market demand for alternative nutritional characteristics, taste characteristics, and/or bowl life characteristics.

### BACKGROUND

Grain products of various formulations have long been known. Improved and new formulations are desirable for new and different products, including grain products having alternative nutritional characteristics, for example, alternative caloric content. The development of new grain products, for example, new grain products employing alternative sweeteners, flavorants, flavor enhancing agents, bowl life extenders and the like, presents challenges. There is a need for grain products which can satisfactorily meet a combination of objectives, including nutritional characteristics, flavor, shelf life, bowl life and other objectives.

US2007/0116 discloses cereal compositions comprising non-caloric or low-caloric high-potency sweeteners. EP 1 038 448 discloses carbohydrate additives for use in methods for preparing popcorn.

It is therefore an object of the present invention to provide grain products having at least one potent natural sweetener and at least one bulking agent. It is an object of at least certain embodiments of the invention (that is, not necessarily all embodiments of the invention) to provide grain products having desirable taste properties. It is an object of at least certain embodiments of the invention to provide grain products having improved formulations. It is an object of at least certain embodiments of the invention to provide grain products having desirable bowl life. These and other objects, features and advantages of the invention or of certain embodiments of the invention will be apparent to those skilled in the art from the following disclosure and description of exemplary embodiments.

### SUMMARY

The invention is as defined in the claims.

In accordance with a first aspect, a grain product includes a base including at least one constituent of at least one grain, and a coating enrobing at least a portion of the base, wherein the coating comprises at least one potent natural sweetener and at least one bulking agent, and wherein the coating provides enhanced bowl life for the grain product. The at least one bulking agent consists of a native maltodextrin. The at least one potent natural sweetener comprises at least one steviol glycoside consisting of rebaudioside A at a concentration of 60 ppm or less. In certain exemplary embodiments, the coating further comprises a natural nutritive sweetener including one or more of one or more of sucrose, fructose, glucose, invert sugar and glucose-fructose syrup. In certain exemplary embodiments, the coating includes a sweetening component comprising a natural nutritive sweetener and the steviol glycoside, wherein the steviol glycoside provides between about 50% and 100% of the sweetness of the sweetening component. The steviol glycoside is present in a non-sweetening amount, e.g., at a concentration of about 60 PPM or less, 50 PPM or less, 40 PPM or less, 30 PPM or less, or 20 PPM or less. In certain exemplary embodiments, the grain includes one or more of corn, rice, wheat, oat and barley. In certain exemplary embodiments, the grain is one or both of corn and oat. In certain exemplary embodiments, the base is in the form of puffs, flakes, shreds, clusters, sheets or any combination thereof. In certain exemplary embodiments, the grain product is in the form of a bar. In certain exemplary embodiments, the grain product contains no sucrose, fructose, glucose, invert sugar or glucose-fructose syrup. In certain exemplary embodiments, the grain product further includes one or more of a preservative, a color additive, a flavorant, a flavor enhancer, a fat replacer, a nutrient, an emulsifier, a stabilizer, a thickener, a binder, a texturizer, a pH control agent, an acidulant, a leavening agent, an anti-caking agent, a humectant, a dough strengthener and a dough conditioner. In certain exemplary embodiments, the at least one bulking agent is present in the grain product at a level of about 5 - 45% by weight. In certain exemplary embodiments, the steviol glycoside consists essentially of rebaudioside A present in an amount sufficient in the grain product to reduce one or both of an undesirable taste characteristic (e.g., one or more of grassy flavor, bitter flavor, grainy flavor, sour flavor and salty flavor).

In accordance with a second aspect, a method of increasing bowl life of a grain product includes at least the steps of providing a grain product, and enrobing at least a portion of the grain product with a coating, wherein the coating comprises at least one potent natural sweetener and at least one bulking agent, and wherein the coating increases bowl life of the grain product. The at least one bulking agent consists of a native maltodextrin. The at least one potent natural sweetener comprises at least one steviol glycoside including rebaudioside A. The at least one steviol glycoside is present in the grain product in a a non-sweetening amount. In certain exemplary embodiments, the crunchiness of the grain product is maintained, the crispiness of the grain product is maintained and/or the sogginess of the grain product is postponed. In certain exemplary embodiments, the at least one bulking agent is present in the grain product at a level of about 5 - 45% by weight.

### DETAILED DESCRIPTION OF CERTAIN EXEMPLARY EMBODIMENTS

Grain products comprising a potent natural sweetener and a bulking agent in accordance with this disclosure may have any of numerous different specific formulations or constitutions. The formulation of a grain product in accordance with this disclosure can vary to a large extent, depending upon such factors as the product's intended market segment, its desired nutritional characteristics, flavor profile and the like. For example, it will generally be an option to add further ingredients to any of the grain product formulations described below.

Grain products comprising a potent natural sweetener and a bulking agent disclosed here can be utilized as hot cereals, ready-to-eat cereals and/or snacks. Grain products disclosed here can include one or more edible grains including, but not limited to, e.g., corn, rice (e.g., brown or white), wheat (e.g., spelt, einkorn, emmer, durum and the like), buckwheat, oat, barley, amaranth, fonio, quinoa, teff, millet, sorghum, triticale, flax, wild rice and the like and any combination thereof. The terms "cereal products" and "grain products" are used interchangeably herein.

The term "bulking agent" is intended to refer to one or more ingredients that can be combined with one or more potent sweeteners (e.g., potent natural sweeteners) described here to increase the ease in which the potent sweetener (e.g., potent natural sweetener) can be handled and/or measured. Potent sweeteners, which are sweeter than sugar, are typically utilized in very small amounts. Thus, the accurate handling and/or measuring of a potent sweetener can be challenging. Accordingly, in certain exemplary embodiments, one or more potent sweeteners described here can be combined with one or more bulking agents combined here to increase the volume of the one or more potent sweeteners. The increase in volume allows improved accuracy in handling and/or measuring a potent sweetener. In certain exemplary embodiments, one or more bulking agents can be added to a non-sweetening amount of one or more potent sweeteners to improve handling and/or measuring accuracy of the one or more potent sweeteners.

In certain exemplary embodiments, a grain product includes at least one constituent of at least one grain, and a combination of at least one potent natural sweetener and at least one bulking agent, wherein the combination of at least one potent natural sweetener and at least one bulking agent allows accurate measurement of the at least one potent natural sweetener in the grain product. In certain exemplary embodiments, the at least one bulking agent includes one or more of maltodextrin (e.g., a native maltodextrin or a resistant maltodextrin), polydextrose, a dextrin, inulin, an oligosaccharide, β-glucan, a resistant starch, a hydrocolloid (e.g., one or more of gum Arabic, pectin, guar gum, alginate, carrageenan, xanthan gum and cellulose gum) and a corn syrup solid. In certain exemplary embodiments, the at least one bulking agent consists essentially of maltodextrin. In certain exemplary embodiments, the at least one potent natural sweetener consists essentially of at least one steviol glycoside. The at least one steviol glycoside is present in a non-sweetening amount. In certain exemplary embodiments, the at least one steviol glycoside consists essentially of rebaudioside A. In certain exemplary embodiments, the grain product is unsweetened. In certain exemplary embodiments, the unsweetened grain product is a hot cereal such as, for example, one or more of oatmeal, multigrain hot cereal, oat bran, cracked wheat, cream of rye, cream of wheat and cream of rice. In certain exemplary embodiments, the oatmeal comprises oats including one or more of quick, rolled and steel cut. In certain exemplary embodiments, the unsweetened grain product comprises one or both of granola and muesli. In certain exemplary embodiments, the grain product is sweetened. In certain exemplary embodiments, the sweetened grain product includes one or more of a ready-to-prepare cereal, a ready-to-eat cereal and a snack. In certain exemplary embodiments, the ready-to-prepare cereal is partially cooked or uncooked. In certain exemplary embodiments, the steviol glycoside consists essentially of rebaudioside A present at a concentration of about 60 PPM or less, 50 PPM or less, 40 PPM or less, 30 PPM or less, or 20 PPM or less. The steviol glycoside consists essentially of rebaudioside A present in an amount sufficient in the grain product to increase a desirable taste characteristic, such as, flavor perception. In certain exemplary embodiments, the at least one grain is one or more of corn, rice, wheat, oat and barley. In certain exemplary embodiments, the grain product further includes further comprising one or more of a preservative, a color additive, a flavorant, a flavor enhancer, a fat replacer, a nutrient, an emulsifier, a stabilizer, a thickener, a binder, a texturizer, a pH control agent, an acidulant, a leavening agent, an anti-caking agent, a humectant, a dough strengthener, a dough conditioner and a combination of any of them. In certain exemplary embodiments, the at least one bulking agent is present in the grain product at a level of at least about 5 - 45% by weight.

In accordance with certain exemplary embodiments, a method of accurately measuring a potent natural sweetener for use in a grain product includes at least the steps of providing a grain product, providing at least one potent natural sweetener, providing at least one bulking agent, combining the at least one potent natural sweetener and the at least one bulking agent to generate a potent natural sweetener-bulking agent mixture, and adding the potent natural sweetener-bulking agent mixture to the grain product. In certain exemplary embodiments, the at least one bulking agent includes one or more of maltodextrin (e.g., a native maltodextrin or a resistant maltodextrin), polydextrose, a dextrin, inulin, an oligosaccharide, β-glucan, a resistant starch, a hydrocolloid (e.g., one or more of gum Arabic, pectin, guar gum, alginate, carrageenan, xanthan gum and cellulose gum) and a corn syrup solid. In certain exemplary embodiments, the at least one bulking agent consists essentially of maltodextrin. In certain exemplary embodiments, the at least one potent natural sweetener consists essentially of at least one steviol glycoside such as, for example, rebaudioside A. In certain exemplary embodiments, the at least one steviol glycoside is present in the grain product after the adding step in a sweetening amount or in a non-sweetening amount. In certain exemplary embodiments, the at least one bulking agent is present in the grain product at a level of about 5 - 45% by weight.

In certain exemplary embodiments, one or more bulking agents is used to increase and/or enhance the bowl life of a grain product described here. One or more bulking agents can be added to a grain product described here e.g., by adding the one or more bulking agents to a constituent of a grain, a base, a coating, or any combination of these. The term "bowl life" is intended to refer to the length of time after immersion of a grain product comprising a potent natural sweetener and a bulking agent disclosed here in a liquid such as, e.g., milk, that the grain product retains desired physical characteristics such as crunchiness, crispiness and the like, and/or resists undesirable physical characteristics such as sogginess and the like. In certain exemplary embodiments, bowl life is the presence or absence of one or more physical characteristics of a grain product after contact with a liquid as compared with prior to contact with the liquid. Physical characteristics can be measured as percentage (e.g., degrees of crunchiness, crispiness, sogginess, etc. that remains after immersion for a specific amount of time), a function of time (e.g., the loss of crunchiness, crispiness, etc. and/or an increase in sogginess, etc. after immersion for a specific time point), or a combination of these. Methods of measuring bowl life are well known in the art *(See* e.g., Gregson and Lee (2002) J. Texture Studies 33:505, doi:10.1111/j.1745-4603.2002.tb01364.x). As used herein, the terms "increasing" or "enhancing" of bowl life mean perceptibly changing the bowl life compared with the perceptible level of bowl life in a correspondingly formulated grain product that does not include a bulking agent and/or a potent natural sweetener.

In certain exemplary embodiments, the crunchiness of a grain product after immersion in a liquid is at least 50%, 55%, 60%, 65%, 70%, 75%, 80%, 85%, 90%, 91%, 92%, 93%, 94%, 95%, 96%, 97%, 98%, 99%, 100%, 125%, 150%, 175%, 200%, 250%, 300%, 350%, 400% or more of the crunchiness of a grain product (e.g., the identical grain product or a similar grain product) prior to immersion. In certain exemplary embodiments, the crispiness of a grain product after immersion in a liquid is at least 50%, 55%, 60%, 65%, 70%, 75%, 80%, 85%, 90%, 91%, 92%, 93%, 94%, 95%, 96%, 97%, 98%, 99%, 100%, 125%, 150%, 175%, 200%, 250%, 300%, 350%, 400% or more of the crispiness of a grain product (e.g., the identical grain product or a similar grain product) prior to immersion. In certain exemplary embodiments, the sogginess of a grain product after immersion in a liquid is reduced by at least 10%, 20%, 30%, 40%, 50%, 55%, 60%, 65%, 70%, 75%, 80%, 85%, 90%, 91%, 92%, 93%, 94%, 95%, 96%, 97%, 98%, 99%, 100%, 125%, 150%, 175%, 200%, 250%, 300%, 350%, 400% or more when compared to the sogginess of a grain product (e.g., the identical grain product or a similar grain product) prior to immersion. In certain exemplary embodiments, one or more characteristics of bowl life (e.g., crunchiness, crispiness, sogginess, etc.) of a grain product described here can be measured after immersion in a liquid for a specific length of time, such as, for example, for 0.5, 1.0, 1.5, 2.0, 2.5, 3.0, 3.5, 4.0, 4.5 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5, 15.0, 15.5, 16.0, 16.5, 17.0, 17.5, 18.0, 18.5, 19.0, 19.5, 20.0 minutes or more.

Suitable bulking agents include, but are not limited to, polydextrose, dextrins (e.g., maltodextrin (e.g., a native maltodextrin or a resistant maltodextrin)), inulin, oligosaccharides, β-glucan, resistant starches (e.g., resistant maltodextrin), hydrocolloids (e.g., one or more of gum Arabic, pectin, guar gum, alginate, carrageenan, xanthan gum and cellulose gum), corn syrup solids and the like. In certain exemplary embodiments, the bulking agent is maltodextrin and is present at a level of about 5 - 45% by weight.

Grain products disclosed here can include one or more constituents of one or more grains. As used herein, the term "grain constituent" is intended to include any component of a whole grain, e.g., the whole grain kernel, the germ, the bran, the endosperm and any combination thereof. Whole grains typically refer to the germ, bran and endosperm of a grain, and may be milled, unmilled, etc. Refined grains typically refer to grain products in which the bran and most or all of the germ have been removed, leaving primarily or only the endosperm. A "grain constituent" may be, e.g., any combination of one or more components of a grain that have been ground into flour, cut into pieces of a variety of sizes or used whole.

As used herein, the term "ready-to-eat cereal" refers to a grain product that may be eaten without the need for further preparation save for the optional addition of a liquid, such as, for example, milk, a milk substitute, juice or the like. As used herein, the term "snack" refers to a grain product that can be consumed from the container optionally without further preparation. Snack grain products include, for example, snack bars such as, for example, grain bars, breakfast bars, granola bars (e.g., crunchy and/or soft), nutrition bars, diet bars and the like. The ready-to-eat grain products and/or snack grain products described herein can be fashioned into a variety of physical forms, such as, e.g., puffs, flakes, shreds, clusters, sheets and any combination thereof.

As used herein, the term "puff" is intended to refer to an expanded grain piece prepared from one or more grains and/or grain constituents. Various methods of making puffs are well known in the art and are described in, for example, U.S. Patent Nos. 4,409,250, 4,620,981, 5,176,936 and 6,319,534. Methods of making puffs are described further below. The term "puffed grain pieces" is used herein in its conventional usage to refer to low density grain pieces wherein each piece typically has a density ranging from about 0.06 to 0.16 g/cc (4.3 to 11 oz. per 124 inch³) or from about 0.09 to 0.14 g/cc (5 to 10 oz. per 124 inch³). Puffs in various embodiments of the grain products disclosed here can be uniform or non-uniform in size, shape, etc.

As used herein, the term "flake" is intended to refer to a grain piece formed by flaking a cooked grain pellet or grain or grain constituent. Methods of making flakes are well known in the art and described in, for example, U.S. Patent Nos. 5,919,503 and 7,105,196. Methods of making flakes are described further below. Wet flakes typically range in thickness from about 350 to 900 µm (0.015 to 0.035 in.) in thickness. Flakes in various embodiments of the grain products disclosed here can be uniform or non-uniform in size, shape, etc.

As used herein, the term "shred" means an elongate grain product piece, e.g., a cereal piece, in the shape of a long, narrow, thin strip. Shreds are typically manufactured by passage of a cooked grain (e.g., wheat berries for shredded wheat) between pairs of rollers, one smooth and one grooved (e.g., a shred mill). Methods of making shreds are well known in the art and are described in, for example, U.S. Patent Nos. 5,270,063, 5,464,644 and 5,972,413. Shreds can optionally be formed into a variety of shapes such as, for example, biscuits (e.g., shredded wheat biscuits). Shreds in various embodiments of the grain products disclosed here can be uniform or non-uniform in size, shape, etc.

As used herein, the term "cluster" is intended to refer an agglomerated grain piece such as, for example, granola. Methods of making clusters are well known in the art and described in, for example, U.S. Patent No. 6,837,682. Clusters in various embodiments of the grain products disclosed here can be uniform or non-uniform in size, shape, etc.

As used herein, the terms "sheet" or "sheeted" are intended to refer to a grain product piece having one or more broad, thin surfaces. Methods of making sheets and sheeted grain products are well known in the art and described in, for example, U.S. Patent Nos. 5,176,936 and 6,746,707 and U.S. Patent Application No. 2003/0134010. Sheets and sheeted pieces in various embodiments of the grain products disclosed here can be uniform or non-uniform in size, shape, etc.

In certain exemplary embodiments, the grain products disclosed here comprising a potent natural sweetener and a bulking agent may include, for example, only the sweetened or unsweetened grain product (e.g., shredded wheat, oatmeal or the like). In other exemplary embodiments, the grain products disclosed here optionally include, for example, one or more components in addition to the grain product, e.g., one or more of an optional coating enrobing at least a portion of the grain product, an optional sweetening amount of a steviol glycoside and other optional components. These other optional components include, but are not limited to, any or all of the following: preservatives, sweeteners, color additives, flavorants, flavor enhancers, fat replacers, nutrients, emulsifiers, stabilizers, thickeners, binders, texturizers, pH control agents, acidulants, leavening agents, anti-caking agents, humectants, dough strengtheners, dough conditioners and the like. Information on each of these components is well known and can be obtained from the U.S. Food and Drug Administration, Center for Food Safety and Applied Nutrition (CFSAN).

In certain exemplary embodiments, the grain products disclosed here comprising a potent natural sweetener and a bulking agent may optionally include one or more preservatives. Preservatives are typically used to prevent food spoilage from bacteria, molds, fungi yeast and the like; slow or prevent changes in color, flavor and/or texture, and/or delay rancidity; and/or maintain freshness of the grain products disclosed here. Suitable preservatives for at least certain exemplary embodiments of the grain products disclosed here include, for example, but are not limited to, ascorbic acid, citric acid, sodium benzoate, calcium propionate, sodium erythorbate, sodium nitrite, sodium chloride, calcium sorbate, potassium sorbate, BHA, BHT, EDTA, tocopherols (e.g., vitamin E) and the like. In certain exemplary embodiments the preservatives employed in the grain products disclosed here generally range from about 0 to about 5 weight percent of the total weight of the grain product or from about 1 to about 3 weight percent, or are present at about 1 weight percent.

The grain products and/or methods disclosed here comprising a potent natural sweetener and a bulking agent may include, for example, a potent natural sweetener including any one or more of stevioside, the rebaudiosides and related compounds suitable for sweetening. These compounds can be obtained by extraction or the like from the Stevia plant. Stevia (e.g., *Stevia rebaudiana Bertoni)* is a sweet-tasting plant, whose leaves contain a complex mixture of natural sweet diterpene glycosides. Steviol glycosides are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). Such compounds are referred to herein as steviol glycosides.

Additional sweeteners suitable for use in various embodiments of the grain products and/or methods disclosed here comprising a potent natural sweetener and a bulking agent include, e.g., other natural and artificial or synthetic sweeteners. Suitable sweeteners and combinations of sweeteners are selected for the desired nutritional characteristics, taste profile for the grain product, sweetness and other organoleptic factors. Sweeteners suitable for at least certain such exemplary embodiments include, for example, one or more of sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo, acesulfame, aspartame, sucralose, saccharin, xylose, arabinose, levulose, isomalt, lactitol, maltitol, trehalose, ribose, and protein sweeteners, such as, for example, thaumatin, monellin, monetin, brazzein, L-alanine and glycine, and any combination thereof.

The grain products comprising a potent natural sweetener and a bulking agent disclosed here optionally employ at least one steviol glycoside can optionally also employ, e.g., nutritive, natural crystalline or liquid sweeteners, such as, for example, sucrose, fructose, glucose, glucose-fructose syrup from natural sources such as apple, chicory, honey, etc., e.g., glucose-fructose syrup, e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, and/or others, and mixtures of any of them. Exemplary artificial sweeteners suitable for use as an optional additional sweetener in at least certain embodiments of the grain products disclosed here include, for example, saccharin, cyclamate, aspartame, other dipeptides, acesulfame potassium, and other such potent sweeteners, and mixtures of any of them, as further discussed below. In at least certain exemplary embodiments of the grain products disclosed here, combinations of at least one steviol glycoside and one or more natural, nutritive sweeteners and/or one or more artificial sweeteners with one or more natural non-nutritive or nutritive potent sweeteners are used to provide the sweetness and other aspects of desired taste profile and nutritive characteristics. It should also be recognized that certain such sweeteners will, either in addition or instead, act as tastents, masking agents or the like in various embodiments of the grain products disclosed here, e.g., when used in amounts below its (or their) sweetness perception threshold in the grain product in question.

In certain exemplary embodiments, a grain product that includes at least one constituent of at least one grain, a non-sweetening amount of a potent natural sweetener and a bulking agent is provided. As used herein, the term "non-sweetening amount" refers to an amount of a potent natural sweetener, e.g., a steviol glycoside, that, in the grain product as a whole, is not perceptible as sweet as judged by a majority of persons that have tasted a sample containing the non-sweetening amount of steviol glycoside. In certain exemplary embodiments, the grain product is not perceptibly sweetened by the low amount of potent natural sweetener, e.g., a steviol glycoside included in the formulation of the product. In other exemplary embodiments, the non-sweetening amount of a potent natural sweetener, e.g., a steviol glycoside, may enhance the inherent sweetness of a grain product, as discussed further herein. Also, in certain exemplary embodiments, the non-sweetening amount of a potent natural sweetener, e.g., a steviol glycoside, can modify the taste of the comestible grain product by decreasing or eliminating one or more undesirable taste characteristics, or increasing one or more desirable taste characteristics or any combination of these. As used herein, the terms increasing, decreasing, accentuating, and enhancing of a taste characteristic means perceptibly changing that taste characteristic compared with the perceptible level of that taste characteristic in a correspondingly formulated grain product that does not include a non-sweetening amount of a natural potent sweetener.

In certain exemplary embodiments of the grain products disclosed here, a non-sweetening amount of a steviol glycoside such as, for example, rebaudioside A, is typically an amount below about 60 PPM of the grain product. In certain exemplary embodiments, a non-sweetening amount of a steviol glycoside such as, for example, rebaudioside A, is between about 1 PPM to about 60 PPM or is less than 20 PPM, less than 50 PPM or between about 20 PPM and 50 PPM. The amount of steviol glycoside used will depend upon the desired level of taste modification (such as, for example, an increase in a desirable taste characteristic and/or flavor perception and/or a decrease in one or more of grassy flavor, bitter flavor and grainy flavor) for the grain product. The amount of steviol glycoside used will also depend on the particular steviol glycoside(s) used as they may differ in the ability to modify the taste of the grain product when used in non-sweetening amounts.

The various potent natural sweeteners included in the grain products disclosed here are edible consumables. By "edible consumables" is meant a food or an ingredient of a food for human or animal consumption. The sweetener or sweetening agent, as those terms are used here, can be a nutritive or non-nutritive, natural or synthetic grain product ingredient or additive (or mixtures of them) which provides sweetness to the grain product, i.e., which in the context of the whole product is perceived by a substantial portion of the consuming public as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent in any given product may involve the interrelationship of elements.

As used herein, the term "taste" refers to the flavor of the grain product and includes sweetness, sourness, bitterness, saltiness and umami (e.g., savoriness or meatiness). As used herein, the term "mouthfeel" refers to a tactile sensation a grain product gives to the mouth (i.e., due to physical and chemical interactions in the mouth). Mouthfeel is evaluated from initial perception on the palate through to swallowing. Mouthfeel and taste may overlap and/or impact each other.

As used herein, the term "undesirable taste characteristic" refers to one or more off-flavors that can be perceived in grain products, particularly in unsweetened grains products or grain products containing one or more whole grain constituents (such as, for example, oatmeal). Undesirable taste characteristics are known in the art and include, for example, but are not limited to, bitterness, sourness, graininess, grassiness, saltiness and any combination thereof.

As used herein, the term "desirable taste characteristic" refers to one or more attractive flavors or tastes that can be added to grain products described here. Desirable taste characteristics are known in the art and include, for example, but are not limited to, one or both of accentuation of flavor impact (e.g., flavor perception when eaten) and enhanced sweetness. In certain exemplary embodiments, a non-sweetening amount of a potent natural sweetener, e.g., a steviol glycoside, reduces or eliminates the need for additional flavor enhancers such as salt, MSG and the like as discussed further herein.

The grain products disclosed here may optionally contain a sweetening amount of a potent natural sweetener. As used herein, the term "sweetening amount" is the amount of a potent natural sweetener, e.g., a steviol glycoside, that yields perceptible sweetness in the product or causes the grain product to taste sweet when ingested by a human or animal. In certain exemplary embodiments a sweetening amount of a potent natural sweetener, e.g., a steviol glycoside, such as, for example, rebaudioside A, is typically between about 0.0001% and about 2% by weight of the base and the coating of the grain products described here. In certain exemplary embodiments, a sweetening amount of a potent natural sweetener, e.g., a steviol glycoside, such as, for example, rebaudioside A, is between about 0.005% and about 1% by weight, between about 0.002% and about 0.550% by weight, between about 0.002% and about 0.020% by weight, between about 0.100% and about 0.550% by weight, between about 0.008% and about 0.018% by weight, or between about 0.150% and about 0.510% by weight of one or both of the base and the coating of the grain products described here. The amount of potent natural sweetener, e.g., a steviol glycoside, used will depend upon the desired level of sweetness for the grain product and the amount of other optional sweetener(s) present in the sweetener product. The amount of potent natural sweetener, e.g., a steviol glycoside used will also depend on the particular a potent natural sweetener, e.g., steviol glycoside(s), used as they may differ in sweetness profile.

In certain exemplary embodiments, the grain products disclosed here comprising a potent natural sweetener and a bulking agent optionally include a sweetening component. As used herein, the term "sweetening component" refers to a composition comprising at least one a potent natural sweetener, e.g., a steviol glycoside, and at least one other ingredient that can be added to the grain to provide sweetness. A sweetening component can be added, e.g., to a constituent of a grain, and/or to one or both of the base and the coating enrobing the base. One or more ingredients of the sweetening component can contribute sweetness to the sweetening component. In certain exemplary embodiments, the sweetening component can contribute between about 50% and 100% of the sweetness of the final grain product. In certain exemplary embodiments, one or more sweetening components can contribute about 50%, 55%, 60%, 65%, 70%, 75%, 80%, 85%, 90%, 95% or 100% of the sweetness of the final grain product.

In certain exemplary embodiments, a sweetening component includes a potent natural sweetener, e.g., a steviol glycoside, together with another sweetener. In certain exemplary embodiments, the coating comprises a natural nutritive sweetener selected from the group consisting of one or more of sucrose, fructose, glucose, invert sugar and glucose-fructose syrup. In certain exemplary embodiments, the coating includes a sweetening component comprising a natural nutritive sweetener and a steviol glycoside, wherein the steviol glycoside provides approximately 50% of sweetness of the sweetening component. In certain exemplary embodiments, the coating includes a sweetening component comprising a steviol glycoside, wherein the steviol glycoside provides approximately 100% of sweetness of the sweetening component.

In certain exemplary embodiments, the base comprises a natural nutritive sweetener selected from the group consisting of one or more of sucrose, fructose, glucose, invert sugar and glucose-fructose syrup. In certain exemplary embodiments, the base includes a sweetening component comprising a natural nutritive sweetener and a potent natural sweetener, e.g., a steviol glycoside, wherein the steviol glycoside provides approximately 50% of sweetness of the sweetening component. In certain exemplary embodiments, the base includes a sweetening component comprising a potent natural sweetener, e.g., a steviol glycoside, wherein the steviol glycoside provides approximately 100% of sweetness of the sweetening component.

In certain exemplary embodiments, the coating and the base each includes a natural nutritive sweetener selected from the group consisting of one or more of sucrose, fructose, glucose, invert sugar and glucose-fructose syrup. In certain exemplary embodiments, the base and the coating each includes a sweetening component comprising a natural nutritive sweetener and a potent natural sweetener, e.g., a steviol glycoside, wherein the steviol glycoside provides approximately 50% of sweetness of the sweetening component. In certain exemplary embodiments, the base and the coating each includes a sweetening component comprising a potent natural sweetener, e.g., a steviol glycoside, wherein the steviol glycoside provides approximately 100% of sweetness of the sweetening component.

In certain exemplary embodiments, a constituent of a grain comprises a natural nutritive sweetener selected from the group consisting of one or more of sucrose, fructose, glucose, invert sugar and glucose-fructose syrup. In certain exemplary embodiments, the constituent of a grain includes a sweetening component comprising a natural nutritive sweetener and a potent natural sweetener, e.g., a steviol glycoside, wherein the steviol glycoside provides approximately 50% of sweetness of the sweetening component. In certain exemplary embodiments, the constituent of a grain includes a sweetening component comprising a potent natural sweetener, e.g., a steviol glycoside, wherein the steviol glycoside provides approximately 100% of sweetness of the sweetening component.

The term "nutritive sweetener" refers generally to sweeteners which provide significant caloric content in typical usage amounts, e.g., more than about 4.0 calories per gram of sweetener. As used herein, a "non-nutritive sweetener" is one which does not provide significant caloric content in typical usage amounts, e.g., less than about 1.0 calorie per gram of sweetener. A "low-calorie" sweetener imparts sweetness to a grain product and has a caloric content of less than about 3.0 calories per gram of sweetener11.

As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a grain product sweetened to a level of 10 degrees Brix with sugar. Potent sweeteners include both nutritive and non-nutritive sweeteners. In addition, potent sweeteners include both potent natural sweeteners and potent artificial sweeteners. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspartame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, the term "natural" is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately. As used herein, the term "artificial" is anything that is not natural, e.g., anything that is made by man.

Artificial and/or additional natural potent sweeteners are suitable for use in at least certain exemplary embodiments of the grain products disclosed here. Such artificial potent sweeteners include peptide based sweeteners, for example, acesulfame potassium, aspartame, neotame, and alitame, and non-peptide based sweeteners, for example, sodium saccharin, calcium saccharin, acesulfame potassium, sodium cyclamate, calcium cyclamate, neohesperidin dihydrochalcone, sucralose, and mixtures of any of them. Suitable natural non-nutritive potent sweeteners are discussed further below. It will be within the ability of those skilled in the art, given the benefit of this disclosure, to select suitable additional or alternative sweeteners for use in various embodiments of the grain products comprising a steviol glycoside disclosed here.

Artificial sweeteners can collectively comprise about 0.000 to 1.000% of the final grain product. In certain exemplary embodiments, artificial sweeteners can collectively comprise about 0.000 to 0.05%, about 0.000 to 0.015% or about 0.000 to 0.013% of the base of a cereal product described herein. In certain exemplary embodiments, artificial sweeteners can collectively comprise about 0.000 to 0.750%, about 0.000 to 0.500%, about 0.000 to 0.400% or about 0.000 to 0.380% of the enrobing coating of a cereal product described herein.

Nutritive sweeteners can collectively comprise 0.007 to about 75%, e.g., about 0.05 to 75% of the final grain product (dry basis). In certain exemplary embodiments, nutritive sweeteners (e.g., sucrose) collectively comprise about 30 to 57% of the final grain product (dry basis) (e.g., 9 to 17 grams of sweetener (e.g., sucrose) per 30 gram serving size of grain). In other exemplary embodiments, nutritive sweeteners comprise less than 30% of the final grain product. In certain exemplary embodiments, nutritive sweeteners can collectively comprise about 0 to 75%, about 0 to 50%, about 0 to 5% or about 0 to 2.6% of the base of a cereal product described herein. In certain exemplary embodiments, nutritive sweeteners can collectively comprise about 20 to 75%, about 22.5 to 65% or about 25 to 57% of the enrobing coating of a cereal product described herein.

In certain exemplary embodiments, the grain products comprising a potent natural sweetener and a bulking agent disclosed here may optionally include one or more color additives. Color additives can be used to offset color loss due to exposure to light, air, temperature extremes, moisture and/or storage conditions; correct natural variations in color; enhance colors that occur naturally; and/or provide for or enhance color of "fun" food embodiments of the grain products disclosed here. Color additives include, for example, but are not limited to, FD&C Blue No. 1, FD&C Blue No. 2, FD&C Green No. 3, FD&C Red No. 3, FD&C Red No. 40, FD&C Yellow No. 5, FD&C Yellow No. 6, Orange B, Citrus Red No. 2, annatto extract, beta-carotene, grape skin extract, carmine, cochineal extract, paprika oleoresin, caramel color, fruit juice, vegetable juice, saffron, water soluble dyes and the like.

In certain exemplary embodiments, the grain products comprising a potent natural sweetener and a bulking agent disclosed here may optionally include one or more flavorants. Flavorants are typically used to add one or more specific natural and/or synthetic flavors to the grain products disclosed here. Flavorants can include one or more natural flavorings, artificial flavorings, spices and various combinations thereof. Exemplary flavorants include, for example, but are not limited to, vanilla, cinnamon, nutmeg, malt, chocolate, nut flavor(s), fruit flavor(s) (e.g., such as juices, extracts, purees, dried fruits and the like or mixtures thereof). Essentially any fruit flavorant can be used, with the most common being apple, peach, pear, apricot, raspberry, blueberry, strawberry, boysenberry, lemon, orange, pineapple or raisin. In certain exemplary embodiments, a strawberry flavorant is used. In certain exemplary embodiments, grain products disclosed here may optionally contain less than 10% by weight of flavorants, between about 2.000% and about 7.500% by weight of flavorants, or between about 4.000% and about 7.300% by weight of flavorants.

In certain exemplary embodiments, the grain products comprising a potent natural sweetener and a bulking agent disclosed here may optionally include one or more flavor enhancers. Flavor enhancers are typically used to enhance flavors already present in the grain products disclosed here. Typically, flavor enhancers do not provide their own separate flavor, such as a flavorant would. Flavor enhancers can be one or more natural enhancers, artificial enhancers or combinations thereof. Flavor enhancers include, for example, but are not limited to, sodium chloride, monosodium glutamate (MSG), monopotassium glutamate, maltol, ethyl maltol, nucleotide-containing compositions derived from shiitake or other suitable mushrooms, disodium succinate, whey proteins, hydrolyzed soy protein, autolyzed yeast extract, disodium guanylate, disodium inosinate, ascorbic acid, malic acid, tartaric acid, citric acid and the like.

In certain exemplary embodiments, the grain products comprising a potent natural sweetener and a bulking agent disclosed here may optionally include one or more fat replacers. Fat replacers are typically used to provide expected texture and/or a creamy mouthfeel in grain products (e.g., reduced-fat grain products) disclosed here. Fat replacers include, for example, but are not limited to, Olestra, cellulose gel, carrageenan, polydextrose, modified food starch, microparticulated egg white protein, guar gum, xanthan gum, whey protein concentrate and the like.

In certain exemplary embodiments, the grain products comprising a potent natural sweetener and a bulking agent disclosed here may optionally include one or more antioxidants. Antioxidants are typically used in grain products to stabilize free radicals before they can react and cause oxidative harm, e.g., after ingestion, in the grain products disclosed here. Antioxidants include, for example, but are not limited to, ascorbic acid, glutathione, vitamin A, vitamin C, vitamin E (e.g., tocopherols and tocotrienols), vitamin B₆, vitamin B₁₂, lipoic acid, uric acid, carotenes (e.g., beta- and retinol), ubiquinone, selenium, lycopene, folate, magnesium, carotenoids, zinc, lutein, zeaxanthin, anthocyanidins, flavanols and catechins, epicatechins, procyanidins, proanthocyanidins, flavonones, isothiocyanates (e.g., sulforaphane), phenols (e.g., caffeic acid, ferulic acid), sulfides/thiols (e.g., diallyl sulfide, allyl methyl trisulfide, dithiolthiones) and the like.

In certain exemplary embodiments, the grain products comprising a potent natural sweetener and a bulking agent disclosed here may optionally include one or more nutrients. Nutrients are typically used to replace one or more vitamins and minerals lost during processing of a grain product disclosed here (i.e., enrichment) and/or to add one or more nutrients that may be lacking in a grain product disclosed here (i.e., fortification). One or more grain products described herein may optionally be fortified with vitamins and minerals.

Embodiments of the present invention may optionally contain vitamins such as, for example, vitamins A, D, E, K, C, thiamin, riboflavin, niacin, vitamin B₆, folate, vitamin B₁₂, biotin, and/or pantothenic acid. In certain exemplary embodiments, the grain products comprising a potent natural sweetener and a bulking agent disclosed here may optionally include one or more vitamins such as, for example, vitamin A precursors (e.g., pro-vitamin A, carotenoids and the like), including, for example, β-carotene, α-carotene, β-apo-8' carotenal, cryptoxanthin and the like. Vitamin A esters (e.g., retinyl palmitate, retinyl acetate and the like) can also be used. Vitamin D can be selected from, for example, cholecalciferol (D³), ergocalciferol (D₂) and their biologically active metabolites and precursors such as, for example, 1-alpha-hydroxy vitamin D, 25-hydroxy vitamin D, 1,25-dihydroxy vitamin D and the like. In exemplary embodiments, all-rac α-tocopherol and RRR-alpha-tocopherol and their esters are used as a source for vitamins. Sources of vitamin E include d1-alpha tocopherol (all-racemic) and its esters, such as, for example, d1-α-tocopheryl acetate and succinate, d1-alpha-tocopherol (RRR) and its esters, d-alpha-tocopherol and its esters, beta-tocopherol, gamma-tocopherol, and their esters, tocopheryl nicotinate and the like. Vitamin K can be selected from phylloquinone (K₁), menaquinone (K₂) and menadione and their salts and derivatives. L-ascorbic acid is exemplary as a vitamin C source, however other forms of vitamin C, for example, D-ascorbic acid, D-dehydroascorbic acid, L-isoascorbic acid, L-dehydroascorbic acid and esters of ascorbic acid (e.g., ascorbyl palmitate) may also be used. The hydrochloride and nitrate salts of thiamin and thiamin alkyl disulfides such as, for example, the prophyidisulfide, tetrahydrofurfuryl disulfide, O-benzoyl disulfide can be used. The hydrochloride and nitrate salts of thiamin are highly preferred. The sources of riboflavin are selected, for example, from crystalline riboflavin coenzyme forms of riboflavin such as, for example, flavin adenine dinucleotide, flavin adenine mononucleotide, riboflavin 5'-phosphate and their salts. Sources of niacin include nicotinic acid, nicotinamide, the coenzyme forms of niacin such as, for example, nicotinamide adenine dinucleotide and nicotinamide adenine dinucleotide phosphate. Vitamin B₆ can be selected from hydrochloride salts or 5'-phosphates of pyridoxine, pyridoxamine and pyridoxal. Folate can be in the form of folic acid, mono- or polyglutamyl folates, dihydro and tetrahydro folates, methyl and formyl folates. Sources of vitamin B₁₂ are, for example, cyanocobalamin, methylcobalamin, 5'-deoxy-adenosylcobalamin and the like. Sources of biotin can be selected from D-biotin, oxybiotin, biocytin, biotinol and the like. The sources of pantothenic acid can be in the form of salts such as, for example, calcium pantothenate or as panthenol, or in the form of coenzyme A.

In certain exemplary embodiments, grain products comprising a potent natural sweetener and a bulking agent disclosed here may optionally be fortified with minerals such as, for example, calcium, phosphorus, magnesium, iron, zinc, iodine, selenium, copper, manganese, fluoride, chromium, molybdenum, sodium, potassium, and chloride The minerals can be in the form of any of the well known salts including carbonate, oxide, hydroxide, chloride, sulfate, phosphate, pyrophosphate, gluconate, lactate, acetate, fumarate, citrate, malate, amino acids and the like for the cationic minerals and sodium, potassium, calcium, magnesium and the like for the anionic minerals. The particular salt used and the concentration used will depend upon their interaction with other food product ingredients.

In certain exemplary embodiments, a grain product comprising a potent natural sweetener and a bulking agent disclosed here can optionally include trace elements and minerals such as, for example, copper, iron, selenium, magnesium, manganese, zinc, and mixtures thereof. Conventional ingredients for vitamins and minerals can be employed to provide the desired trace elements. For example, iron can be provided by reduced iron, iron sulfite, ferric sodium pyrophosphate, and/or iron fumarate. Copper can be provided by Cu₂O, CuCl₂, CuSO₄ and mixtures thereof. Magnesium can be provided by MgO, MgCl₂, MgCO₂, Mg(OH)₂, magnesium acetate and mixtures thereof. Zinc can be provided by, for example Zn-citrates, Zn-gluconates, Zn-stearates, Zn-amino acid chelates, Zn-ascorbates and mixtures thereof.

In certain exemplary embodiments, the grain products comprising a potent natural sweetener and a bulking agent disclosed here may optionally include one or more emulsifiers. Emulsifiers are typically used to allow smooth mixing of grain product ingredients and/or to prevent separation of grain product ingredients disclosed here. Emulsifiers include, for example, but are not limited to, soy lecithin, monoglycerides, diglycerides, egg yolks, polysorbates, sorbitan monostearate and the like.

In certain exemplary embodiments, the grain products comprising a potent natural sweetener and a bulking agent disclosed here may optionally include one or more stabilizers, thickeners or texturizers. Stabilizers, thickeners, binders and texturizers are typically used to produce a uniform texture and/or to improve the mouthfeel of a grain product disclosed here. Stabilizers, thickeners, binders and texturizers include, for example, but are not limited to, gelatin, pectin, guar gum, carrageenan, xanthan gum, whey and the like.

In certain exemplary embodiments, the grain products comprising a potent natural sweetener and a bulking agent disclosed here may optionally include one or more pH control agents or acidulants. PH control agents and acidulants are typically used to control acidity and/or alkalinity and/or prevent spoilage of the grain products described disclosed here. PH control agents and acidulants include, for example, lactic acid, citric acid, ammonium hydroxide, sodium carbonate and the like.

In certain exemplary embodiments, the grain products comprising a potent natural sweetener and a bulking agent disclosed here may optionally include one or more leavening agents. Leavening agents are typically used to promote rising of grain products disclosed here. Leavening agents include, for example, but are not limited to, baking soda, monocalcium phosphate, calcium carbonate and the like.

In certain exemplary embodiments, the grain products comprising a potent natural sweetener and a bulking agent disclosed here may optionally include one or more anti-caking agents. Anti-caking agents are typically used to keep powdered grain components disclosed here free-flowing and/or to prevent moisture absorption. Anti-caking agents include, for example, but are not limited to, calcium silicate, iron ammonium citrate, silicon dioxide and the like.

In certain exemplary embodiments, the grain products comprising a potent natural sweetener and a bulking agent disclosed here may optionally include one or more humectants. Humectants are typically added to grain products disclosed here to retain moisture, e.g., of components such as, for example, shredded coconut, marshmallows, confections and the like. Humectants include, for example, but are not limited to, glycerin, sorbitol and the like.

In certain exemplary embodiments, the grain products comprising a potent natural sweetener and a bulking agent disclosed here may optionally include one or more dough strengtheners or conditioners. Dough strengtheners and conditioners are typically added to grain products disclosed here to produce a stable dough. Dough strengtheners and conditioners include, for example, but are not limited to, ammonium sulfate, azodicarbonamide, L-cysteine and the like.

In certain exemplary embodiments, the amount and type of these components that may optionally be employed to produce the grain products comprising a potent natural sweetener and a bulking agent described here depend upon the desired color, flavor, texture, nutritional content or other benefit of the final food bars being produced. All of these optional components are commercially available from sources known by those of skill in the art.

### Grain Product Base Processing

As used herein, the terms "base," "spoonable base," "grain product base," "cereal base," and "constituent of at least one grain" are used interchangeably, and refer to edible pieces of grain products such as, for example, puffs, flakes, shreds, clusters, sheets and any combination thereof. A grain product base may be suitable for consumption as is or, optionally, may require additional processing as described here (e.g., one or more of cutting, shredding, enrobing, cooking, and the like). A grain product base can comprise a wide variety of shapes, densities, sizes and compositions. A grain product base can be produced, for example, as discussed in U.S. Patent No. 5,709,902 or by any other art-recognized methods. As discussed in U.S. Patent No. 5,709,902, a grain product base can include a plurality of individual pieces of wet, unexpanded, ready-to-eat grain compositions such as, for example, wet flakes, shreds, wet sheeted dough pellets, biscuits, granola and mixtures thereof. In certain exemplary embodiments, wet, untoasted grain pellets having a moisture content of about 12% to 25% or of about 16% to 20% are used as the grain product base. In other exemplary embodiments, puffed pieces are conventionally toasted after puffing and, in certain exemplary embodiments, thereafter coated and dried.

In the conventional preparation of a grain product comprising a potent natural sweetener and a bulking agent, a dry blend of starchy grain ingredients with or without a bran or fiber constituent is well mixed and then combined with water and other grain product ingredients (e.g., such as salt(s), sugar(s), malt or other flavors, starches and the like and combinations thereof as discussed further herein), e.g., mixing with heat to cook or gelatinize the starchy component of the grain composition. The gelatinized or cooked grain, upon further mixing, can form a cooked farinaceous dough. A variety of well known cooking methods and equipment can be used to prepare a cooked grain dough. In certain exemplary embodiments, the wetted grain blend can be processed in a short cook time cooker extruder (e.g., a single or twin screw extruder) or in an extended cook time cooker such as a pressurized and agitated steam cooker each of which form the cooked grain dough which in turn can be fed to a grain pellet forming extruder to form grain pellets. In other exemplary embodiments, the cooking and dough forming steps are performed simultaneously in a high pressure cooker extruder equipped with a pellet-forming die head. Cooked grain dough pellets formed in this manner typically range from about 18% to 30% moisture.

In certain exemplary embodiments, the cooked grain dough is formed into a dough sheet by sheeting, which sheet is then sectioned, e.g., by longitudinally cutting and transversely sheeting, to form pellets in sheet form. The pellets can then be dried in a conventional pellet dryer and optionally tempered such as in a temper bin to adjust or equilibrate the moisture content for further processing.

In certain exemplary embodiments, the grain product base is a puffed grain. Pellets having a moisture content of about 10% to 14% can be puffed such as by a conventional puffing gun to form a puffed ready-to-eat grain product base, especially oat based pieces in the form of rings or other compositions in the form of spherical puffed grain pieces. The puffed base grain pieces exit the puffing gun at a moisture content of about 6%. In still other embodiments, the puffed pieces are prepared without an intermediate pellet forming step by direct expansion at the die head of a cooker extruder, e.g., a twin screw cooker extruder. In other exemplary embodiments, puffed pieces are prepared by oven puffing or microwave puffing. Such methods are well known in the art.

The puffed grain can optionally be toasted in an oven of conventional design such as a fluidized bed-type oven. While the air temperature and duration for oven toasting the puffed grain product will necessarily vary according to the size and shape of the grain product and its moisture content, it has been found that an oven temperature in the range of about 335 °F to 400 °F applied to a heat-set grain product for about 1 to 2 minutes is satisfactory to dry an extruded, irregular, nugget shaped grain product of about 3/16" to 5/16" in diameter to a moisture content at which the heat set grain product retains its fully expanded structure and is therefore structurally stable.

In certain exemplary embodiments, the grain product base is a flaked grain. Flakes can be made using a variety of methods known in the art. In certain exemplary embodiments, dried non-circular pellets are used to form wet flakes using conventional flaking rolls. Thereafter, the wet flakes so formed are subjected to toasting to form toasted, dried grain flakes. A grain flake can be tenderized, toasted and partially expanded by rapid heating of wet flakes which converts the dense, hard, wet flakes into more palatable, porous, tender flakes. The toasting operation can also enhance the color and flavor of the finished grain product. Toasting is typically accomplished by heating the wet flakes to a temperature of between about 93.3 to 315.5 °C (200 to 600 °F) until a moisture content of approximately 2 to 5% is obtained. Toasting of the wet flakes can be practiced in conventional dryers, vacuum dryers or other commercial baking equipment.

In certain exemplary embodiments, cooked whole grains are tempered and shredded in shredding rolls to form wet grain shreds. In other exemplary embodiments, the shreds can be laminated or otherwise arranged or formed into biscuits of various sizes to form the grain product base. In other exemplary embodiments, the shredded grain is formed into layers to form a shredded grain biscuit. Optionally, the shredded biscuits can be filled, e.g., with a fruit filling or a confection (e.g., a water-based icing composition).

In certain exemplary embodiments, the grain product base is formed into one or more sheets (e.g., sheeted). In other exemplary embodiments, the grain product base is formed into a sheet by conventional means such as by feeding at least one dough rope into one or more sheeting rolls to form sheets to a thickness of about 200 to 400 µm micrometers. In other exemplary embodiments, the thin continuous sheets can be longitudinally subdivided into continuous ribbons. In other exemplary embodiments, a thin continuous sheet or ribbon is folded back and forth on itself to form the number of layers desired in a grain product. In certain exemplary embodiments, the sheets can be fabricated from all the same formulation of cooked grain product dough or each can be of a particular cooked grain product dough formulation. In certain exemplary embodiments, sheet pieces or ribbons are formed into a bed or mass of two or more layers being visually distinct with interstitial voids. Once the layers are formed, at least a portion of the layers be bound together to prevent total delaminating upon further processing and complete separation of the layers from each other.

Within this general outline of grain processing, a wide variety of particular methods and variations can be used. In the production of a ready-to-eat grain, various general art-known procedures can be used depending upon the desired form, type or condition of the final product.

### Enrobing

As used herein, the term "enrobe" refers to the step of providing a coating composition (e.g., a coating composition including a sweetening component) to a grain product. In certain exemplary embodiments, the coating is uniformly applied to the surface of a grain piece to evenly coat the exterior. In other exemplary embodiments, the coating is applied to portions of the surface of a grain piece, e.g., between about 10% and about 90% of the surface of the grain piece. In other exemplary embodiments, the coating is selectively deposited on particular locations in a known manner. Enrobing may be performed before and/or after the toasting or drying step described below.

In certain exemplary embodiments, a coating composition including a sweetening component is applied to a grain product piece(s) described here. The term "coating composition," as used herein, is a general collective term that includes both sweetening syrups having no solids or oil components present (e.g., sugar syrups) as well as other compositions that include an oil component, whether or not emulsified, and/or solids. Well known coating application techniques can be employed. Generally, sweetening syrups comprise 20 to 50% sucrose, 0 to 30% corn syrup, 0 to 25% oil and 9 to 75% moisture (e.g., 31 to 54% water). In certain exemplary embodiments of the grain products comprising a potent natural sweetener and a bulking agent disclosed here, a portion or all of the sucrose present in the sweetening syrup is replaced with a potent natural sweetener, e.g., a steviol glycoside (e.g., a rebaudioside).

In certain exemplary embodiments, one or more coating compositions described here can be applied to grain product piece(s) using a variety of techniques known in the art, e.g., using an enrober drum or other coating vessel or equipment using a liquid coating composition. Generally, a useful technique involves tumbling. The grain piece(s) and liquid coating composition are each charged in any order to a rotating drum and tumbled for a sufficient time to enrobe the grain piece(s) with a coating. In certain exemplary embodiments, a liquid coating composition is added after the grain piece(s) have been added to the drum. In other exemplary embodiments, a liquid coating composition is spayed over the grain piece(s), which obviates a need for tumbling. In other exemplary embodiments, a dry coating process can be used to enrobe the grain piece(s) with a coating composition. In other exemplary embodiments, a coating composition can also include or be co-applied with particulates such as, for example, fruit and nut pieces and/or small grain flakes. Enrobing methods and apparatuses are well known in the art and are described in, for example, U.S. Patent Nos. 4,079,151, 4,880,645, 5,453,383, 5,516,541, 5,709,902, 5,968,572, 6,174,553 and 7,163,708.

In certain exemplary embodiments, the coating composition additionally comprises about 0.1% to 15% of an optional flavor constituent and/or vitamins. The addition of a flavor constituent to the coating composition can be used to replace some or all of a sugar component (e.g., sucrose), to augment flavor development and/or to compensate for flavor losses that can occur from the toasting step(s) described here. These steps, due to their heat application, tend to drive off the volatile flavor constituents leading to flavor degradation or loss. Heat tolerant high potency sweeteners can also be used (e.g., acesulfame K). However, heat sensitive high potency sweeteners (e.g., aspartame) should not be used exclusively since the rigorous high temperatures of the subsequent drying step can cause degradation of these expensive high potency sweeteners. In certain exemplary embodiments, optional vitamins used in this step are heat tolerant. A particularly useful combination of vitamins for topical application consist of vitamins C, A and D and mixtures thereof. In other exemplary embodiments, the coating composition can additionally comprise about 1% to 20% of a reaction flavor ingredient. Such a reaction flavor ingredient reacts due to the elevated temperature of the toasting step. The reaction can be with the other coating composition ingredients or with the grain piece itself. Exemplary reaction flavor ingredients include non-fat dry milk solids, malt and other grain syrups. Other suitable reaction flavors are commercially available from various commercial vendors.

In certain exemplary embodiments, enrobed grain products disclosed here comprising a potent natural sweetener and a bulking agent provide the advantage of enhanced color brightness. Typically, when a grain product is enrobed, the brightness of the observed color of the surface of the grain product is diminished. This may be due, at least in part, to the effect of sugar in the coating. It has been discovered that a coating with at least one potent natural sweetener, e.g., a steviol glycoside, causes less color brightness attenuation than is observed using typical enrobing formulations known in the art. In certain exemplary embodiments, an enrobed grain product, e.g., an artificially or naturally colored product, comprising at least one potent natural sweetener, e.g., a steviol glycoside, in the coating enrobing the grain product has a surface color brightness that is greater than that of such enrobed grain product employing sugar in place of such steviol glycoside in the coating enrobing the grain product. In certain exemplary embodiments, an enrobed grain product comprising at least one potent natural sweetener, e.g., a steviol glycoside, present in the coating enrobing the grain product has a surface brightness that is similar to the brightness observed in the grain product prior to enrobing.

If a "frosted" appearance for the sugar coating is desired (as compared with a clear or glossy coating appearance), then selecting a sugar content and crystal structure (e.g., adding crystalline sugar) can provide a frosted appearance. A frosted appearance can also be provided by adding small amounts of titanium dioxide (TiO₂) to the coating composition. Suitable TiO₂ concentrations can range from about 0.02% to about 0.5% of the coating composition. Addition of a powdered white pigment can be added to the other frosted coating components to provide a pleasing, initial frosted appearance as well as providing a resistance to dissolution in milk.

### Toasting/Drying the Grain Product Base

In certain exemplary embodiments, one or more drying or toasting steps are performed to reduce the moisture of the grain product comprising a potent natural sweetener and a bulking agent and obtain a finish moisture content level not exceeding 15% by weight. In certain exemplary embodiments, the finish moisture content is from about 1% to 6% or about 2% to 4% by weight. The one or more drying steps can be performed by a variety of heating methods (e.g., toasting, baking, microwaving and the like) and/or dehydrating methods known in the art.

In certain exemplary embodiments, the external surface of the grain piece, during at least a portion of the drying step, reaches a temperature of ≥ 250 °F (≥ 121 °C). The drying step can be performed by toasting, baking or other steps involving moisture reduction. For an enrobed grain piece, it is important for the formation of an optional sugar crust feature that the temperature gradient be such that the higher temperature is external to the grain product base. For such applications, high intensity microwave heating techniques which create a reverse or internal gradient would not be suitable since the desired external crust layer would not be formed.

If desired, a pre-drying step can be performed prior to a high temperature or toasting step. The pre-drying step can include an initial drying step with forced hot air having a temperature of about 350 to 475 °F to an intermediate moisture of about 6% to 10%, and a final drying step with forced hot air having a temperature of about 275 to 375 °F to a moisture content of 1% to 6%. The elevated temperature or toasting step can be continued until the grain pieces obtain a finish moisture content of about 1 % to 6% or from about 2% to 4%.

If desired, the.dried pieces can be enrobed with one or more additional components such as, for example, a sweetening component, one or more heat sensitive vitamins or the like. The grain pieces can then be packaged and distributed in conventional manner.

### Bar Formation

In certain exemplary embodiments, one or more grain products comprising a potent natural sweetener and a bulking agent described here are provided in a bar form. Methods of forming bars are well known in the art. In certain exemplary embodiments, a multiplicity of optionally enrobed, dried grain product pieces, optionally in combination with one or more additional ingredients (such as, e.g., nuts, dried fruit, chocolate pieces, marshmallows, etc.), are premixed to provide a uniform dry mixture. The resulting dry mixture is mixed with a binder system in sufficient amounts and manner to extensively distribute binder over the multiplicity of dried grain product pieces and optional additional ingredients. The resulting bar composition can be pressed and cut into bar shapes. The resulting bars can be packaged in a conventional or otherwise suitable manner for such products.

In certain exemplary embodiments, compression can be performed by spreading the mixture onto a leveled surface and applying compression from above. Any convenient suitable means can be used in this respect, such as, e.g., mold(s), pressure plate(s), compression roller(s), conveyor belt(s), etc. The compression treatment will increase the density of the mixture. For example, the compression may increase the density of the mixture by about 25 to 150 percent. In certain exemplary embodiments, the compression increases the density of the mixture from about 0.2 to about 0.4 g/cc before compression to about 0.45 to about 0.65 g/cc after compression.

A bar may be formed in any suitable shape, size and thickness. It can have a regular or irregular geometric shape. Regular geometric shapes include, but are not limited to, rectangular, square, circular, or oval cross-sections. In certain exemplary embodiments, a bar may contain a filling layer, a topping layer, or a coating or any combination of these. Although not limited thereto, the grain product bars may be cut into sizes having a weight of about 20 grams to about 100 grams.

The following example is a specific embodiment of the present invention, but is not intended to limit it.

### EXAMPLE I

### Grain Product Having a Potent Natural Sweetener and Bulking Agent

**Table 1. Total Rebaudioside A in Crunch Berries Samples**

| **Component** | **100% Reb A** | **50% Reb A** | **25 ppm** | **50 ppm** |
|---|---|---|---|---|
| % Reb A Base (dry wt basis) | 0.0175 | 0.0085 | 0.0025 | 0.0025 |
| % Reb A Syrup (wet basis) | 0.5132 | 0.1452 | 0.0025 | 0.0050 |
| Dry Mix Moisture - % | 7.5000 | 7.5000 | 7.5000 | 7.5000 |
| Syrup Initial Moisture - % | 55.4172 | 31.5752 | 22.1684 | 22.1684 |
| Finished Moisture - % | 2.5000 | 2.5000 | 2.5000 | 2.5000 |
| Mix % Base | 81.6536 | 67.5768 | 53.5000 | 53.5000 |
| Mix % Syrup | 18.3464 | 32.4232 | 46.5000 | 46.5000 |
| Adjusted % Reb A Base* | 0.0184 | 0.0090 | 0.0026 | 0.0026 |
| Adjusted % Reb A Syrup* | 0.7848 | 0.1874 | 0.0030 | 0.0060 |
| Final % Base | 0.0150 | 0.0061 | 0.0014 | 0.0014 |
| Final % Syrup | 0.1440 | 0.0608 | 0.0014 | 0.0028 |
| Final % Total Finished Product | 0.1590 | 0.0668 | 0.0028 | 0.0042 |

| | | | | |
|---|---|---|---|---|
| * adjusted for moisture differential | | | | |

**Table 2. Formulation for Puffed Grain Product**

| **Ingredient** | **Amount (% by weight)** |
|---|---|
| Flour | 90.000 - 98.000 |
| Sugar | 2.000 - 6.000 |
| Rebaudioside A | 0.002 - 0.020 |
| Artificial Sweetener | 0.004 - 0.015 |
| Salt & Minor Ingredients | 2.000 - 2.500 |

**Table 3. Formulation for Enrobing Syrup**

| **Ingredient** | **Amount (% by weight)** |
|---|---|
| Sugar | 0.000 - 75.000 |
| Bulking Agent | 0.000 - 75.000 |
| Rebaudioside A | 0.002 - 0.550 |
| Artificial Sweetener | 0.000 - 0.400 |
| Water | 20.000 - 55.000 |
| Flavor & Minor Ingredients | 2.000 - 7.500 |
| Oil | 5.000 - 15.000 |

Given the benefit of the above disclosure and description of exemplary embodiments, it will be apparent to those skilled in the art that numerous alternative and different embodiments are possible in keeping with the general principles of the invention disclosed here. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A grain product comprising:
a base including at least one constituent of at least one grain; and
a coating enrobing at least a portion of the base, wherein the coating comprises a potent natural sweetener and a bulking agent, wherein the potent natural sweetener comprises a steviol glycoside consisting of rebaudioside A at a concentration of 60 ppm or less and the bulking agent consists of a native maltodextrin and wherein the coating provides enhanced bowl life for the grain product compared with the grain product not including the buking agent and potent natural sweetener.

2. The grain product of claim 1
wherein the bulking agent is present at a level of 5 to 45% by weight.

3. The grain product of claim 1 wherein the coating further comprises a natural nutritive sweetener including one or more of one or more of sucrose, fructose, glucose, invert sugar and glucose-fructose syrup.

4. The grain product of claim 1, wherein the steviol glycoside provides between 50% and 100% of the sweetness of the grain product.

5. The grain product of claim 1, wherein the rebaudioside A is present in an amount of between of 0.005% and 1% by weight.

6. The grain product of claim 1 wherein the grain product contains no sucrose, fructose, glucose, invert sugar or glucose-fructose syrup.

7. The grain product of claim 1 further comprising one or more of a preservative, a color additive, a flavorant, a flavour enhancer, a fat replacer, a nutrient, an emulsifier, a stabilizer, a thickener, a binder, a texturizer, a pH control agent, an acidulant, a leavening agent, an anti-caking agent, a humectant, a dough strengthener, and a dough conditioner.

8. The grain product of claim 1 wherein the rebaudioside A reduces an undesirable taste characteristic, wherein the undesirable taste characteristic is one or more of grassy flavor, bitter flavor, grainy flavor, sour flavor and salty flavor.

9. The grain product of claim 1, wherein the rebaudioside A increases a desirable taste characteristic wherein the desirable taste characteristic is one or both of sweetness and flavor perception.

10. The grain product of claim 1, wherein the base is in the form of puffs, flakes, shreds, clusters, sheets or any combination thereof.

11. A method of increasing bowl life of a grain product comprising the steps of:
providing a grain product; and
enrobing at least a portion of the grain product with a coating, wherein the coating comprises a potent natural sweetener including rebaudioside A and a bulking agent, wherein the bulking agent consists of native maltodextin and wherein the coating increases bowl life of the grain product compared with the grain product not including the bulking agent and potent natural sweetener.

12. The method of claim 11, wherein the potent natural sweetener consists of rebaudioside A.

13. The method of claim 12, wherein the bulking agent is present in an amount of 5 to 45% by weight.

14. The grain product of claim 1, or method of claim 11, wherein the grain product further includes a protein sweetener, selected from the group consisting of thaumatin, monellin, monetin, brazzein, L-alanine, glycine, and combinations thereof.

## Patentansprüche

1. Getreideprodukt, das Folgendes umfasst:
eine Grundlage, die mindestens einen Bestandteil mindestens eines Getreides beinhaltet; und
einen Überzug, der mindestens einen Teil der Grundlage umhüllt, wobei der Überzug einen starken natürlichen Süßstoff und einen Füllstoff umfasst, wobei der starke natürliche Süßstoff ein Steviolglykosid, das aus Rebaudiosid A besteht, in einer Konzentration von 60 ppm oder weniger umfasst und der Füllstoff aus einem nativen Maltodextrin besteht und wobei der Überzug eine verbesserte Stabilität in Milch ("bowl life") für das Getreideprodukt im Vergleich zu dem Getreideprodukt, das den Füllstoff und den starken natürlichen Süßstoff nicht beinhaltet, bereitstellt.

2. Getreideprodukt nach Anspruch 1, wobei der Füllstoff in einem Niveau von 5 bis 45 Gew.-% vorliegt.

3. Getreideprodukt nach Anspruch 1, wobei der Überzug weiterhin einen natürlichen nahrhaften Süßstoff umfasst, der eine bzw. einen oder mehrere von Saccharose, Fruktose, Glukose, Invertzucker und Glukose-Fruktose-Sirup beinhaltet.

4. Getreideprodukt nach Anspruch 1, wobei das Steviolglykosid zwischen 50 % und 100 % der Süße des Getreideprodukts bereitstellt.

5. Getreideprodukt nach Anspruch 1, wobei das Rebaudiosid A in einer Menge von 0,005 Gew.-% bis 1 Gew.-% vorliegt.

6. Getreideprodukt nach Anspruch 1, wobei das Getreideprodukt keine Saccharose, keine Fruktose, keine Glukose, keinen Invertzucker oder keinen Glukose-Fruktose-Sirup enthält.

7. Getreideprodukt nach Anspruch 1, das weiterhin einen bzw. ein oder mehrere eines Konservierungsstoffs, eines Farbzusatzes, eines Geschmacksstoffs, eines Geschmacksverstärkers, eines Fettersatzmittels, eines Nährstoffs, eines Emulgators, eines Stabilisators, eines Verdickungsmittels, eines Bindemittels, eines Texturierungsmittels, eines Mittels zur Steuerung des pH-Werts, eines Säuerungsmittels, eines Triebmittels, eines Antibackmittels, eines Feuchthaltemittels, eines Teigfestigungsmittels und eines Teigverbesserers umfasst.

8. Getreideprodukt nach Anspruch 1, wobei das Rebaudiosid A ein nicht wünschenswertes Geschmackscharakteristikum verringert, wobei das nicht wünschenswerte Geschmackscharakteristikum eines oder mehrere eines fettigen Aromas, eines bitteren Aromas, eines Getreidearomas, eines sauren Aromas und eines salzigen Aromas ist.

9. Getreideprodukt nach Anspruch 1, wobei das Rebaudiosid A ein wünschenswertes Geschmackscharakteristikum verstärkt, wobei das wünschenswerte Geschmackscharakteristikum eine oder beide von Süße und Aromawahrnehmung ist.

10. Getreideprodukt nach Anspruch 1, wobei die Grundlage in der Form von gepufften Produkten, Flocken, geschroteten Produkten, Produkten in Traubenform, flächigen Produkten oder einer beliebigen Kombination davon ist.

11. Verfahren zum Verbessern der Stabilität in Milch ("bowl life") eines Getreideprodukts, wobei das Verfahren die folgenden Schritte umfasst:
Bereitstellen eines Getreideprodukts und
Umhüllen mindestens eines Teils des Getreideprodukts mit einem Überzug, wobei der Überzug einen starken natürlichen Süßstoff, der Rebaudiosid A beinhaltet, und einen Füllstoff umfasst, wobei der Füllstoff aus nativem Maltodextrin besteht und wobei der Überzug die Stabilität in Milch ("bowl life") des Getreideprodukts im Vergleich zu dem Getreideprodukt, das den Füllstoff und den starken natürlichen Süßstoff nicht beinhaltet, verbessert.

12. Verfahren nach Anspruch 11, wobei der starke natürliche Süßstoff aus Rebaudiosid A besteht.

13. Verfahren nach Anspruch 12, wobei der Füllstoff in einer Menge von 5 bis 45 Gew.-% vorliegt.

14. Getreideprodukt nach Anspruch 1 oder Verfahren nach Anspruch 11, wobei das Getreideprodukt weiterhin einen Proteinsüßstoff beinhaltet, der aus der Gruppe bestehend aus Thaumatin, Monellin, Monetin, Brazzein, L-Alanin, Glycin und Kombinationen davon ausgewählt ist.

## Revendications

1. Un produit céréalier comprenant :
une base incluant au moins un constituant d'au moins une graine ; et
un revêtement enrobant au moins une partie de la base, dans lequel le revêtement comprend un édulcorant naturel puissant et un agent gonflant, dans lequel l'édulcorant naturel puissant comprend un glycoside de stéviol constitué de rébaudioside A à une concentration de 60 PPM ou moins et l'agent gonflant est constitué d'une maltodextrine native, et dans lequel le revêtement fournit un meilleur croustillant du produit céréalier comparé avec le produit céréalier n'incluant ni l'agent gonflant ni l'édulcorant naturel puissant.

2. Le produit céréalier selon la revendication 1
dans lequel l'agent gonflant est présent à raison de 5 à 45% en poids.

3. Le produit céréalier selon la revendication 1, dans lequel le revêtement comprend en outre un édulcorant naturel nutritif incluant un ou plusieurs d'un ou plusieurs parmi le sucrose, le fructose, le glucose, le sucre inverti et le sirop de glucose-fructose.

4. Le produit céréalier selon la revendication 1, dans lequel le glycoside de stéviol fournit entre 50% et 100% du goût sucré du produit céréalier.

5. Le produit céréalier selon la revendication 1, dans lequel le rébaudioside A est présent dans une quantité comprise entre 0,005% et 1% en poids.

6. Le produit céréalier selon la revendication 1, dans lequel le produit céréalier ne contient ni sucrose, ni fructose, ni glucose, ni sucre inverti, ni sirop de glucose-fructose.

7. Le produit céréalier selon la revendication 1, comprenant en outre un ou plusieurs parmi un conservateur, un additif de coloration, un arôme, un rehausseur de goût, un substitut de matière grasse, un élément nutritif, un émulsifiant, un stabilisant, un épaississeur, un liant, un texturant, un agent régulateur du pH, un acidulant, un agent levant, un agent anti-agglomérant, un humectant, un exhausteur de goût de la pâte et un agent de conditionnement de la pâte.

8. Le produit céréalier selon la revendication 1, dans lequel le rébaudioside A réduit un goût indésirable caractéristique, dans lequel le goût indésirable caractéristique est un ou plusieurs parmi un goût d'herbe, un goût amer, un goût de grain, un goût aigre et un goût salé.

9. Le produit céréalier selon la revendication 1, dans lequel le rébaudioside A augmente un goût désirable caractéristique, dans lequel le goût désirable caractéristique est un ou les deux parmi un goût sucré et une perception d'arôme.

10. Le produit céréalier selon la revendication 1, dans lequel la base est sous la forme de produits soufflés, en pétales, en filaments, en pépites, en feuilles ou de leurs combinaisons.

11. Un procédé pour augmenter le croustillant d'un produit céréalier comprenant les étapes de :
la fourniture d'un produit céréalier; et
l'enrobage d'au moins une partie du produit céréalier par un revêtement, dans lequel le revêtement comprend un édulcorant naturel puissant incluant du rébaudioside A et un agent gonflant, dans lequel l'agent gonflant est constitué d'une maltodextrine native et dans lequel le revêtement augmente le croustillant du produit céréalier comparé avec le produit céréalier n'incluant ni l'agent gonflant ni l'édulcorant naturel puissant.

12. Le procédé selon la revendication 11, dans lequel l'édulcorant naturel puissant est constitué de rébaudioside A.

13. Le procédé selon la revendication 12, dans lequel l'agent gonflant est présent à raison de 5 à 45% en poids.

14. Le produit céréalier selon la revendication 1, ou le procédé selon la revendication 11, dans lequel le produit céréalier inclut en outre une protéine édulcorante, sélectionnée dans le groupe constitué par la thaumatine, la monelline, la monetine, la brazzéine, la L-alanine et la glycine, et leurs mélanges.
